# EUROPEAN PATENT APPLICATION

(11) **EP 3 508 966 A1**
(43) Date of publication of application: **10.07.2019**
(21) Application number: 17918353.8
(22) Date of filing: 27.12.2017
(51) Int. Cl.: G06F 3/0485

(54) **HOUSEHOLD APPLIANCE CONTROL METHOD AND DEVICE, AND WASHING MACHINE**

(30) Priority: 18.07.2017 CN 201710587036; 04.12.2017 CN 201711262638
(71) Applicant: Wuxi Little Swan Company Limited, Wuxi, Jiangsu 214028 (CN)
(72) Inventor: MEHMET, Oney, Wuxi Jiangsu 214028 (CN)
(74) Representative: Lam, Alvin
(86) International application number: PCT/CN2017/119098
(87) International publication number: WO 2019/015256

(57) **Abstract**

A household appliance control method and device, and a washing machine. The method comprises: in a case where a first program setting page is displayed, detecting a target operation executed by an user in a control area (101); when the target operation is detected, displaying a plurality of control programs in a scrolling manner according to the target operation (102); when stopping of the target operation is detected, using the displayed control program as a selected target program (103); and controlling the operation of the household appliance according to the target program (104). By means of the mode of displaying the plurality of control programs in a scrolling manner according to the operation direction of the target operation executed by the user in the control area, display and selection of the plurality of control programs can be realized, so that the number of the control programs is no longer limited by the display area, thereby facilitating the addition of selectable control programs; refined household appliance control is realized, and the technical problems in the prior art of rough household appliance control and poor control effect are solved.

## Description

### CROSS-REFERENCE TO RELATED APPLICATION

This application claims priorities to Chinese Patent Application Serial No. 201710587036.8 entitled with "Household appliance control method and device, and washing machine", filed with the State Intellectual Property Office of P. R. China on July 18, 2017, by Wuxi Little Swan Company Limited, and to Chinese Patent Application Serial No. 201711262638.2 entitled with "Household appliance control method and device, and washing machine", filed with the State Intellectual Property Office of P. R. China on December 04, 2017 by Wuxi Little Swan Company Limited, the entire contents of which are incorporated herein by reference.

### FIELD

The present disclosure relates to a field of household appliances, and more particularly to a controlling method for household appliances, an apparatus for household appliances and a washing machine.

### BACKGROUND

In the related art, household appliances such as a washing machine and the like may usually select a limited number of control programs in a mechanical wheel manner or a mechanical button manner, so that the household appliance may be operated according to the control program selected.

Due to the limited options of the control programs, control of the household appliances is not accurate enough and thus control effect is not good in the related art.

### SUMMARY

Accordingly, a first object of the present disclosure is to provide a controlling method for a household appliance, thus increasing options of control programs, realizing refined control of the household appliance, and solving the technical problems of inaccurate control and unsatisfied control effect of the household appliances in the related art.

A second object of the present disclosure is to provide another controlling method for a household appliance.

A third object of the present disclosure is to provide a further controlling method for a household appliance.

A fourth object of the present disclosure is to provide a controlling apparatus for a household appliance.

A fifth object of the present disclosure is to provide another controlling apparatus for a household appliance.

A sixth object of the present disclosure is to provide a further controlling apparatus for a household appliance.

A seventh object of the present disclosure is to provide a washing machine.

An eighth object of the present disclosure is to provide a computer device.

A ninth object of the present disclosure is to provide a non-temporary computer-readable storage medium.

A tenth object of the present disclosure is to provide a computer program product.

In order to realize the above objects, an embodiment of a first aspect of the present disclosure provides a controlling method for a household appliance, including:
detecting a target operation in a manipulation region if a first program setting page is displayed;
displaying a plurality of control programs scrollably according to the target operation when the target operation is detected;
taking a displayed control program as a target program when the target operation is stopped; and
controlling running of the household appliance according to the target program.

With the controlling method for a household appliance provided in the embodiment of the present disclosure, a target operation in a manipulation region is detected if a first program setting page is displayed; a plurality of control programs is displayed scrollably according to the target operation when the target operation is detected; the displayed control program is taken as a target program when the target operation is stopped; and running of the household appliance is controlled according to the target program. Since a manner of displaying a plurality of control programs scrollably according to an operation direction of the target operation performed by a user in the manipulation region is employed, displaying and selecting of the plurality of control programs may be realized, and the number of the control programs is no longer limited by the displaying area, thus increasing options of control programs, realizing refined control of the household appliance, and solving the technical problems of inaccurate control and unsatisfied control effect of the household appliances in the related art.

In order to realize the above objects, an embodiment of a second aspect of the present disclosure provides a controlling method for a household appliance, including:
determining at least one sub-region in a manipulation region according to a page displayed;
detecting an operation to which a corresponding sub-region responds in each of the sub-regions of the manipulation region;
setting a control program in the page according to the operation when the operation to which the sub-region responds is detected; and
controlling running of the household appliance according to the control program.

With the controlling method for a household appliance provided in the embodiment of the present disclosure, at least one sub-region is determined in the manipulation region according to the page displayed; an operation to which a corresponding sub-region responds is detected in each of the sub-regions of the manipulation region; a control program in the page is set according to the operation when the operation to which the sub-region responds is detected. In this embodiment, a parameter of the control program may be selected according to the operation of the sub-region so that the control program may be set in a refined and personalized manner without having to run only according to a default parameter value of the control program, thus solving the technical problems of inaccurate control and unsatisfied control effect of the household appliances in the related art.

In order to realize the above objects, an embodiment of a third aspect of the present disclosure provides a controlling method for a household appliance, including:
detecting a target operation;
displaying a plurality of control programs scrollably according to the target operation when the target operation is detected;
taking a displayed control program as a target program when the target operation is stopped; and
controlling running of the household appliance according to the target program.

With the controlling method for a household appliance provided in the embodiment of the present disclosure, the target operation is detected; a plurality of control programs is displayed scrollably according to the target operation when the target operation is detected; the displayed control program is taken as the target program when the target operation is stopped; and running of the household appliance is controlled according to the target program. Since a manner of displaying a plurality of control programs scrollably according to an operation direction of the target operation is employed, displaying and selecting of the plurality of control programs may be realized, and the number of the control programs is no longer limited by the displaying area, thus increasing options of control programs, realizing refined control of the household appliance, and solving the technical problems of inaccurate control and unsatisfied control effect of the household appliances in the related art.

In order to realize the above objects, an embodiment of a fourth aspect of the present disclosure provides a controlling apparatus for a household appliance, including:
a detecting module configured to detect a target operation in a manipulation region if a first program setting page is displayed;
a displaying module configured to display a plurality of control programs scrollably according to the target operation when the target operation is detected;
a determining module configured to take a displayed control program displayed as a target program when the target operation is stopped; and
a controlling module configured to control running of the household appliance according to the target program.

With the controlling apparatus for a household appliance provided in the embodiment of the present disclosure, a target operation in a manipulation region is detected if a first program setting page is displayed; a plurality of control programs is displayed scrollably according to the target operation when the target operation is detected; a displayed control program is taken as a target program when the target operation is stopped; and running of the household appliance is controlled according to the target program. Since a manner of displaying a plurality of control programs scrollably according to an operation direction of the target operation performed by a user in the manipulation region is employed, displaying and selecting of the plurality of control programs may be realized, and the number of the control programs is no longer limited by the displaying area, thus increasing options of control programs, realizing refined control of the household appliance, and solving the technical problems of inaccurate control and unsatisfied control effect of the household appliances in the related art.

In order to realize the above objects, an embodiment of a fifth aspect of the present disclosure provides a controlling apparatus for a household appliance, including:
a determining module configured to determine at least one sub-region in a manipulation region according to a page displayed;
a detecting module configured to detect an operation to which a corresponding sub-region responds in each of the sub-regions of the manipulation region;
a setting module configured to set a control program in the page according to the operation when the operation to which the sub-region responds is detected; and
a running module configured to control running of the household appliance according to the control program.

With the controlling apparatus for a household appliance provided in the embodiment of the present disclosure, at least one sub-region is determined in the manipulation region according to the page displayed; an operation to which a corresponding sub-region responds is detected in each of the sub-regions of the manipulation region; a control program in the page is set according to the operation when the operation to which the sub-region responds is detected. In this embodiment, a parameter of the control program may be selected according to the operation of the sub-region so that the control program may be set in a refined and personalized manner without having to run only according to a default parameter value of the control program, thus solving the technical problems of inaccurate control and unsatisfied control effect of the household appliances in the related art.

In order to realize the above objects, an embodiment of a sixth aspect of the present disclosure provides a controlling apparatus for a household appliance, including:
a detecting module configured to detect a target operation performed;
a displaying module configured to display a plurality of control programs scrollably according to the target operation when the target operation is detected;
a selecting module configured to take a displayed control program as a target program when the target operation is stopped; and
a running module configured to control running of the household appliance according to the target program.

With the controlling apparatus for a household appliance provided in the embodiment of the present disclosure, the target operation is detected; a plurality of control programs is displayed scrollably according to the target operation when the target operation is detected; the displayed control program is taken as the target program when the target operation is stopped; and running of the household appliance is controlled according to the target program. Since a manner of displaying a plurality of control programs scrollably according to an operation direction of the target operation is employed, displaying and selecting of the plurality of control programs may be realized, and the number of the control programs is no longer limited by the displaying area, thus increasing options of control programs, realizing refined control of the household appliance, and solving the technical problems of inaccurate control and unsatisfied control effect of the household appliances in the related art.

In order to realize the above objects, an embodiment of a seventh aspect of the present disclosure provides a washing machine configured to perform a controlling method for a household appliance according to the embodiment of the first aspect, a controlling method for a household appliance according to the embodiment of the second aspect, or a controlling method for a household appliance according to the embodiment of the third aspect.

In order to realize the above objects, an embodiment of an eighth aspect of the present disclosure provides a computer device, including: a memory, a processor, and a computer program stored in the memory and being executable by the processor, in which when the computer program is executed by the processor, the processor is configured to perform a controlling method for a household appliance according to the embodiment of the first aspect, a controlling method for a household appliance according to the embodiment of the second aspect, or a controlling method for a household appliance according to the embodiment of the third aspect.

In order to realize the above objects, an embodiment of a ninth aspect of the present disclosure provides a non-temporary computer-readable storage medium having stored therein a computer program that, when executed by a processor, is configured to perform a controlling method for a household appliance according to the embodiment of the first aspect, a controlling method for a household appliance according to the embodiment of the second aspect, or a controlling method for a household appliance according to the embodiment of the third aspect.

In order to realize the above objects, an embodiment of a tenth aspect of the present disclosure provides a computer program product having instructions that, when executed by a processor, are configured to perform a controlling method for a household appliance according to the embodiment of the first aspect, a controlling method for a household appliance according to the embodiment of the second aspect, or a controlling method for a household appliance according to the embodiment of the third aspect.

Additional aspects and advantages of the disclosure will be set forth in part in the description which follows, and in part will be apparent from the following description, or may be learned by practice of the disclosure.

### BRIEF DESCRIPTION OF THE DRAWINGS

In order to describe technical solutions in the embodiments of the present disclosure or in the related art more clearly, accompanying drawings required for describing the embodiments or the related art will be briefly introduced as followed. Obviously, the accompanying drawings in the following description merely show some embodiments of the present disclosure. For those skilled in the art, other drawings may be obtained based on these drawings without any inventive work.
Fig. 1 is a flow chart of a controlling method for a household appliance according to Example 1 of the present disclosure;
Fig. 2 is a first schematic diagram of a manipulation region according to an embodiment of the present disclosure;
Fig. 3 is a flow chart of setting a control program in a page according to Example 2 of the present disclosure;
Fig. 4A is a second schematic diagram of a manipulation region according to an embodiment of the present disclosure;
Fig. 4B is a third schematic diagram of a manipulation region according to an embodiment of the present disclosure;
Fig. 4C is a fourth schematic diagram of a manipulation region according to an embodiment of the present disclosure;
Fig. 5 is a flow chart of a controlling method for a household appliance according to Example 3 of the present disclosure;
Fig. 6A is a schematic diagram of an operation panel when a power key is not pressed;
Fig. 6B is a schematic diagram of the operation panel when the power key is pressed;
Fig. 6C is a schematic diagram of an operation interface;
Fig. 6D is a schematic diagram of a page displaying region of a program setting page;
Fig. 7 is a flow chart of a controlling method for a household appliance according to Example 4 of the present disclosure;
Fig. 8 is a flow chart of a controlling method for a household appliance according to Example 5 of the present disclosure;
Fig. 9 is a schematic diagram of a controlling apparatus for a household appliance according to Example 6 of the present disclosure;
Fig. 10 is a schematic diagram of a controlling apparatus for a household appliance according to Example 7 of the present disclosure;
Fig. 11 is a schematic diagram of a controlling apparatus for a household appliance according to Example 8 of the present disclosure;
Fig. 12 is a block diagram of an exemplary computer device applicable to realize the embodiments of the present disclosure.

### DETAILED DESCRIPTION

Reference will be made in detail to embodiments of the present disclosure. The embodiments described herein with reference to drawings are explanatory, illustrative, and used to generally understand the present disclosure. The embodiments shall not be construed to limit the present disclosure. The same or similar elements and the elements having same or similar functions are denoted by like reference numerals throughout the descriptions.

Hereinafter, a controlling method for a household appliance, a controlling apparatus for a household appliance, and a washing machine according to embodiments of the present disclosure will be described with reference to the accompanying drawings.

### Example 1

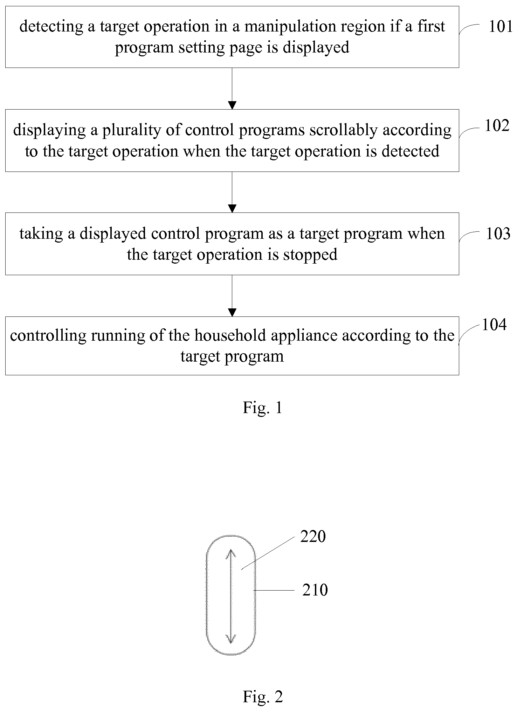

Fig. 1 is a flow chart of a controlling method for a household appliance according to Example 1 of the present disclosure.

In the related art, household appliances such as a washing machine and the like may usually select a limited number of control programs in a mechanical wheel manner or a mechanical button manner. Due to a limited area of the operation panel of the household appliance, no further control program may be added. Therefore, in the related art, control of the household appliance is not accurate enough and thus a refined control cannot be realized.

Aiming at this problem, embodiments of the present disclosure provide a controlling method for a household appliance, thus increasing options of control programs, realizing refined control of the household appliance, and solving the technical problems of inaccurate control and unsatisfied control effect of the household appliances in the related art.

As shown in Fig. 1, the controlling method for the household appliance includes:
At step 101: a target operation is detected in a manipulation region if a first program setting page is displayed.

The target operation may be a sliding operation. The first program setting page herein refers to a setting page of the control programs which may be displayed scrollably.

In an embodiment of the present disclosure, a groove may be disposed on the control panel of the household appliance, and the manipulation region may be disposed in the groove. The manipulation region includes a first sub-region, an operation to which a first sub-region responds is a target operation carrying direction information. The groove may receive a finger, that is, a width of the groove is similar to a width of the finger. A sensor is disposed in the groove and may be configured to detect a direction of the sliding operation. Further, a sliding distance or a sliding speed of the sliding operation may also be detected.

As shown in Fig. 2, the groove 210 is disposed longitudinally. There is a straight line with a bidirectional arrow in the manipulation region 220. The region in which the straight line with the bidirectional arrow is located is the first sub-region. A finger may be placed in the groove, and continuously slide upward or downward in the first sub-region, so that the target operation carries the direction information.

It should be noted that, it is known by those skilled in the art that the sensor for detecting the sliding operation may specifically be in a form of a touch pad or a roller. In the present embodiment, the specific form of the sensor is not limited.

At step 102: a plurality of control programs is displayed scrollably according to the target operation when the target operation is detected.

Specifically, if an operation direction of the target operation is a first direction, the plurality of control programs is displayed scrollably in a first sequence; if the operation direction of the target operation is a second direction opposite to the first direction, the plurality of control programs is displayed scrollably scrolled in a second sequence opposite to the first sequence.

In an embodiment of the present disclosure, the grooves are disposed in a longitudinal direction, and a direction of the sliding operation is upward or downward in the longitudinal direction. Therefore, if the sliding operation is to slide upward, a plurality of control programs is displayed scrollably in a positive sequence. Conversely, if the slide operation is to slide downward, the plurality of control programs is displayed scrollably in a reverse sequence.

As shown in Fig. 2, the groove 210 is disposed in the longitudinal direction, and the sliding operation is upward or downward in the longitudinal direction. Therefore, if the sliding operation is to slide upwards, a plurality of control programs is displayed scrollably in a positive sequence. Conversely, if the slide operation is to slide downward, the plurality of control programs is displayed scrollably in a reverse sequence.

The number of the control programs is more than one, and the plurality of control programs may be ranked according to a sequence of identification characters of the control programs, or to frequencies of control programs being selected. In this embodiment, the ranking manner of the control program is not limited.

It should be noted that, if the sensor may detect the sliding distance or the sliding speed of the sliding operation, a rolling speed (that is, a duration for displaying each control program) when the plurality of control programs is displayed scrollably may be adjusted according to the sliding distance or the sliding speed. The longer the sliding distance is or the faster the sliding speed is, the shorter the duration for displaying a control program is.

At step 103: a displayed control program is taken as a target program when the target operation is stopped.

Specifically, a user may keep performing a target operation continuously until a desired target program is displayed, then the target operation is stopped. Accordingly, the scrollable display of control programs of the household appliance may be stopped and only the selected target program is displayed.

When the target operation is detected to be stopped, the control program displayed in the first setting page is taken as the selected target program. Specifically, a user may keep performing a target operation continuously until a desired target program is displayed, then the target operation is stopped. Accordingly, the scrollable display of control programs of the household appliance may be stopped and only the selected target program is displayed.

The target program is configured to indicate values of the control parameter item when the household appliance is running. For example, the parameter item for the washing machine herein include a washing temperature, a motor rotation speed, duration of each washing link, etc. Different control programs are formed according to combinations of different values of the parameter item in order to facilitate refined control of the washing process.

At step 104: running of the household appliance is controlled according to the target program.

Specifically, the target program is configured to indicate the values of the control parameter item when the household appliance is running. For example, the parameter item for the washing machine herein include a washing temperature, a motor rotation speed, duration of each washing link, etc. Different control programs are formed according to combinations of different values of parameter item in order to facilitate refined control of the washing process.

In this example, the target operation is detected; a plurality of control programs is displayed scrollably according to the target operation when the target operation is detected; the displayed control program is taken as the target program when the target operation is stopped; and running of the household appliance is controlled according to the target program. Since a manner of displaying a plurality of control programs scrollably according to an operation direction of the target operation performed by the user is employed, displaying and selecting of the plurality of control programs may be realized, and the number of the control programs is no longer limited by the displaying area, thus increasing options of control programs, realizing refined control of the household appliance, and solving the technical problems of inaccurate control and unsatisfied control effect of the household appliances in the related art.

### Example 2

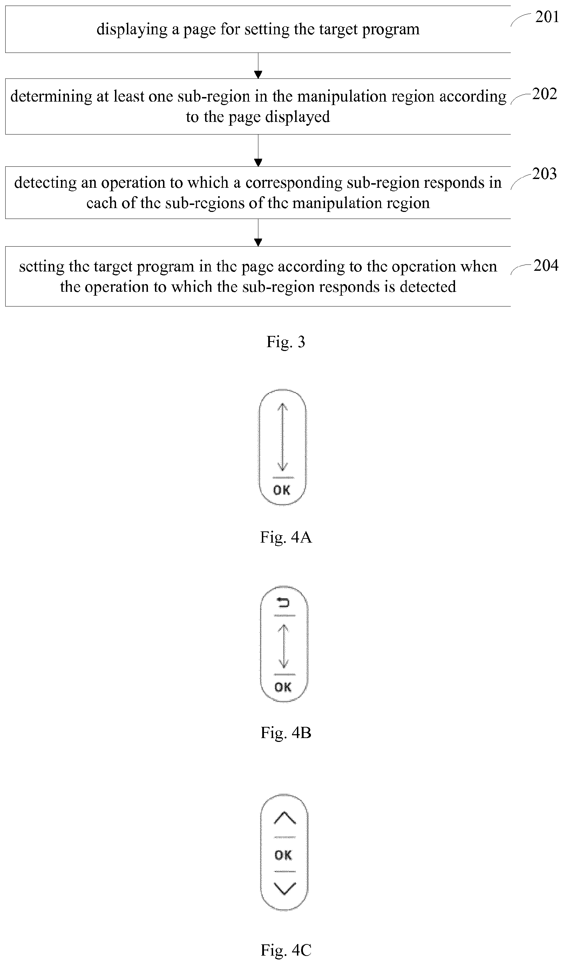

Based on the previous embodiments, before controlling the running of the household appliance according to the target program at step 104, the following operations may also be performed as shown in Fig. 3.

At step 201: a page for setting the target program is displayed.

After the target program is selected, the page for setting the target program is displayed on an operation interface.

At step 202: at least one sub-region is determined in the manipulation region according to the page displayed.

The manipulation region includes at least one sub-region, and different sub-regions respond to different operations and correspond to different control strategies.

In an embodiment of the present disclosure, the number of sub-regions in the manipulation region may be determined and the manipulation region may be divided into the sub-regions according to the displayed page content. In general, the more complex the content of the page is, more sub-regions are formed in the manipulation region. On the contrary, the simpler the content of the page is, fewer sub-regions are formed in the manipulation region.

At step 203, an operation to which a corresponding sub-region responds is detected in each of the sub-regions of the manipulation region.

In an embodiment of the present disclosure, a sensor may be disposed in a groove, and may be configured to detect an operation in each of the sub-regions of the manipulation region.

The operations performed by a user may include clicking or sliding. The operations to which different sub-regions respond may be different. The operation to which a specific sub-region responds may be determined according to a currently displayed page, which will be described in detail hereinafter rather than herein.

Alternatively, a corresponding sub-region dividing manner and an operation to which each of the sub-regions responds may be preset for each page, and when the page is displayed, the corresponding sub-region dividing manner and the operations to which the sub-regions respond are acquired, and accordingly the detection is performed in the manipulation region.

At step 204: the target program in the page is set according to the operation when the operation to which the sub-region responds is detected.

In this embodiment, when an operation to which the sub-region responds in the manipulation region is detected by a sensor in the groove, a plurality of control strategies of the sub-region is queried according to the operation, a control strategy that matches the operation is acquired, and the parameters of the control program are adjusted according to this control strategy so as to set the control program in the page.

The control strategy is configured to indicate the parameters of the control program required to be adjusted and the values of the adjusted parameters. In a process of displaying the same page, each of the sub-regions corresponds to a plurality of control strategies, and each control strategy matches one operation performed by a user, such that the control strategy matched with the sub-region may be queried according to the operation in a certain sub-region, and thus adjusting parameters of the control program to be the values indicated by the control strategy.

In this example, the target program in the page may be set according to an operation to which the sub-region responds in the manipulation region, and thus the control on the household appliance is further refined.

In order to clearly illustrate this example, several possible application scenes are provided. Different program settings pages having different program setting contents are displayed in different application scenes. In order to distinguish, different program setting pages are referred to as a first program setting page, a second program setting page, a third program setting page and a fourth program setting page respectively. Each of the scenes will be introduced as follows.

### Scene 1:

If a displayed page is the second program setting page, the manipulation region includes a first sub-region and a second sub-region. An operation to which the second sub-region responds is a triggered operation carrying no direction information.

As shown in Fig. 4A, the groove is disposed longitudinally, and the manipulation region includes a region in which an OK key is located and a region in which a straight line with a bidirectional arrow on top of the OK key is located. The region in which the OK key is located is a second sub-region and may respond to the triggered operation. The region in which the straight line with the bidirectional arrow is located is the first sub-region and may respond to the sliding operation carrying the direction information. The sliding operation may be performed in the first region to select the options in the displaying region, and the OK key is triggered for confirming the selection.

### Scene 2:

If a displayed page is the third program setting page, the manipulation region includes a first sub-region and at least two second sub-regions.

As shown in Fig. 4B, the groove is disposed longitudinally, and the manipulation region includes a region in which an OK key is located, a region in which a back key is located, and a region in which a straight line with a bidirectional arrow is located. The region in which the OK key is located and the region in which the back key is located are both a second sub-region and may respond to the triggered operation. The region in which the straight line with the bidirectional arrow is located is the first sub-region and may respond to the sliding operation. In other words, the OK key or the back key may be triggered, or the sliding operation may be performed in the region in which the straight line with the bidirectional arrow is located.

### Scene 3:

If a displayed page is the fourth program setting page, the manipulation region includes at least three second sub-regions. In other words, when the fourth program setting page is displayed in the page, only the triggered operation carrying no direction information may be performed in the manipulation region.

As shown in Fig. 4C, the groove is disposed longitudinally, and the manipulation region includes an upward moving key, an OK key and a downward moving key. All of the regions where the three keys are located respectively are the second sub-regions. The triggered operation may be performed on the upward moving key, the downward moving key and the OK key.

It should be noted that the first program setting page, the second program setting page, the third program setting page, and the fourth program setting page described above have different program setting contents. In other words, different types of the manipulation region may be set according to different displaying contents of the displayed page of the household appliance. For example, the manipulation region including one first sub-region is applicable to a setting page where a program setting content has only one option. The manipulation region including a first sub-region and at least two second sub-regions is suitable to a setting page having a complex level configuration of contents.

For different scenes, step 204 is described with reference to the above three types of manipulation region. The target program in the page is set according to the operation when the operation to which the sub-region responds is detected.

### (1) The displayed page is the second program setting page of Scene 1.

If the displayed page is the second program setting page, a cursor is controlled to move in the second program setting page according to the direction information of the target operation when the target operation is detected in the first sub-region.

A value or a selected state of an option corresponding to a position of the cursor is adjusted when the triggered operation is detected in the second sub-region, in which the option is configured to set a parameter of the control program.

In this embodiment, the target manipulation may be a sliding operation.

A manipulation region shown in Fig. 4A is taken as an example, the groove is disposed longitudinally, and an upward or downward sliding operation may be performed in a region, in which a straight line with a bidirectional arrow is located, in a continuous manner by a user. At this time, the sliding operation may be detected in the first sub-region responding to such a sliding operation, and the cursor is controlled to move in the second program setting page according to the direction of the sliding operation. The position where the cursor is located corresponds to the value or the selected state of the option.

When the cursor is at a current position, the OK key is clicked to confirm the option. At this time, the triggered operation may be detected in the region in which the OK button is located. The parameter of the control program is set according to the value or the selected state of the option corresponding to the position where the cursor is located, e.g., a default value is adjusted to a value of an option corresponding to a position where the cursor is located. Therefore, the household appliance is operated according to the set control program.

### (2) The displayed page is the third program setting page of Scene 2.

If the displayed page is the third program setting page, a cursor is controlled to move in the third program setting page according to the direction information of the target operation when the target operation is detected in the first sub-region.

A value or a selected state of an option corresponding to a position of the cursor is adjusted when the triggered operation is detected in a second sub-region of the at least two second sub-regions, in which the option is configured to set a parameter of the control program.

A menu level of the third program setting page currently displayed is determined and a previous menu of the menu level is displayed when the triggered operation is detected in another second sub-region of the at least two second sub-regions.

A manipulation region shown in Fig. 4B is taken as an example, and the manipulation region includes a first sub-region and two second sub-regions. An upward or downward sliding operation may be performed in a region, in which a straight line with a bidirectional arrow is located, in a continuous manner by a user. At this time, the sliding operation may be detected in the first sub-region responding to such a sliding operation, and the cursor is controlled to move in the third program setting page according to the direction of the sliding operation. In order words, a sliding operation may be performed in the first sub-region to move the cursor in the third program setting page so as to select the value or state of the parameter of the control program.

When the cursor is at a current position, the OK key is clicked to confirm the option. At this time, the triggered operation may be detected in the region in which the OK key is located. The parameter of the control program is set according to the value or the selected state of the option corresponding to the position where the cursor is located, e.g., a default value is adjusted to a value of an option corresponding to a position where the cursor is located.

In this embodiment, the menu of the third program setting page has a plurality of levels. When returning to the previous menu is required by a user, the back key shown in Fig. 4B may be triggered. When the triggered operation is detected in the second sub-region in which the back key is located, the menu level of the currently displayed third program setting page is determined, and the previous menu of the current menu is displayed.

The manipulation region in this embodiment is applicable to a program setting page having a menu level. When returning to the previous menu for setting is required by the user, the back key may be triggered. Therefore, the control program may be set in a refined and personalized manner by operating each of the sub-regions in the manipulation region.

### (3) The displayed page is the fourth program setting page of Scene 3.

If the displayed page is the fourth program setting page, a cursor is controlled to move in the fourth program setting page in a first direction when the triggered operation is detected in a second sub-region of at least three second sub-regions.

When the triggered operation is detected in another second sub-region of the at least three second sub-regions, the cursor is controlled to move in the fourth program setting page in a second direction different from the first direction.

When the triggered operation is detected in yet another second sub-region of the at least three second sub-regions, a value or a selected state of an option corresponding to a position of the cursor is adjusted.

A manipulation region shown in Fig. 4C is taken as an example, the groove is disposed longitudinally. The manipulation region includes three second sub-regions, which are a region in which an upward moving key is located, a region in which an OK key is located, and a region in which a downward moving key is located.

When the upward moving key is triggered by a user to select options in the displaying region, the triggered operation may be detected in the first sub-region in which the upward moving key is located, and then the cursor is controlled to move upward in the fourth program setting page.

When the downward moving key is triggered by a user to select options in the displaying region, the triggered operation may be detected in the first sub-region in which the downward moving key is located, and then the cursor is controlled to move downward in the fourth program setting page.

In an embodiment, an upward direction may be taken as a first direction, and a downward direction may be taken as a second direction.

When the cursor is at the current position, the OK key is clicked to confirm the selection. At this time, the triggered operation may be detected in the second region in which the OK key is located. The parameter of the control program is set according to the value or the selected state of the option corresponding to the position where the cursor is located, e.g., a default value is adjusted to the value of the option corresponding to the position where the cursor is located.

According to the manipulation region provided in this embodiment, the triggered operation is performed in different second sub-regions by a user, such that the cursor may be moved in the setting page in the first direction or the second direction and may be used to confirm the value or the state of the selected option. The parameter of the control program is adjusted according to the value or a selected state of the option corresponding to a position where the cursor is located, and thus the values of the parameters of the control program is selected according to the requirements and the refinement and personalization of the control of household appliance are improved.

Further, in order to improve accuracy of the operation, the household appliance is precisely controlled. Specifically, if there are at least two sub-regions in the manipulation region, when an operation is detected in one sub-region of the manipulation region, the remaining sub-regions except the one in the manipulation region are disabled.

In the manipulation region shown in Fig. 4A, if the triggered operation is detected in the sub-region in which the OK key is located, the region in which the straight line with a bidirectional arrow is located is disabled, thus ensuring that the confirmation operation is not affected.

In the manipulation region including three sub-regions shown in Fig. 4B, if the triggered operation is detected in the region in which the back key is located, the other two sub-regions are disabled, such that a back operation is not affected by operations in other sub-regions.

If an operation of a preset duration is not detected in one sub-region, the remaining sub-regions are re-enabled. For example, the manipulation region shown in Fig. 4B is taken as an example, the other two sub-regions except the sub-region in which the back key is located are disabled after the back key is triggered. After the third setting page is back to the previous menu, if no triggered operation is further detected in the preset duration such as 5 seconds, the other two sub-regions are re-enabled.

### Example 3

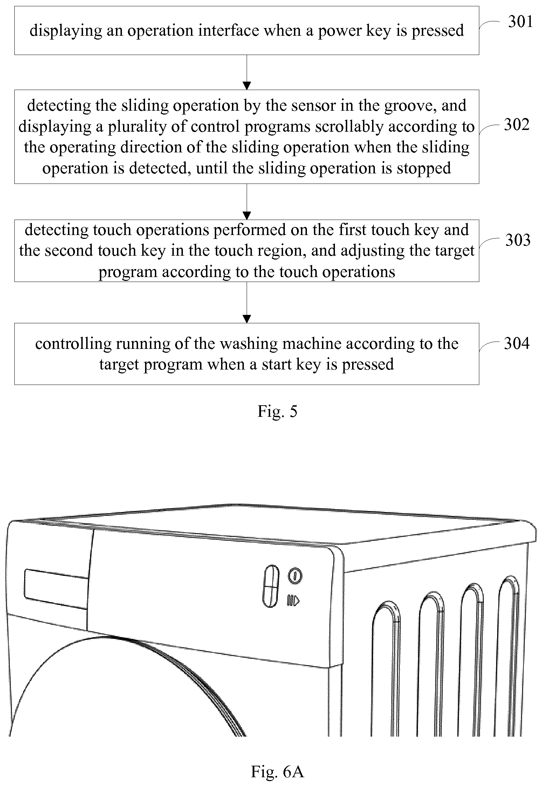

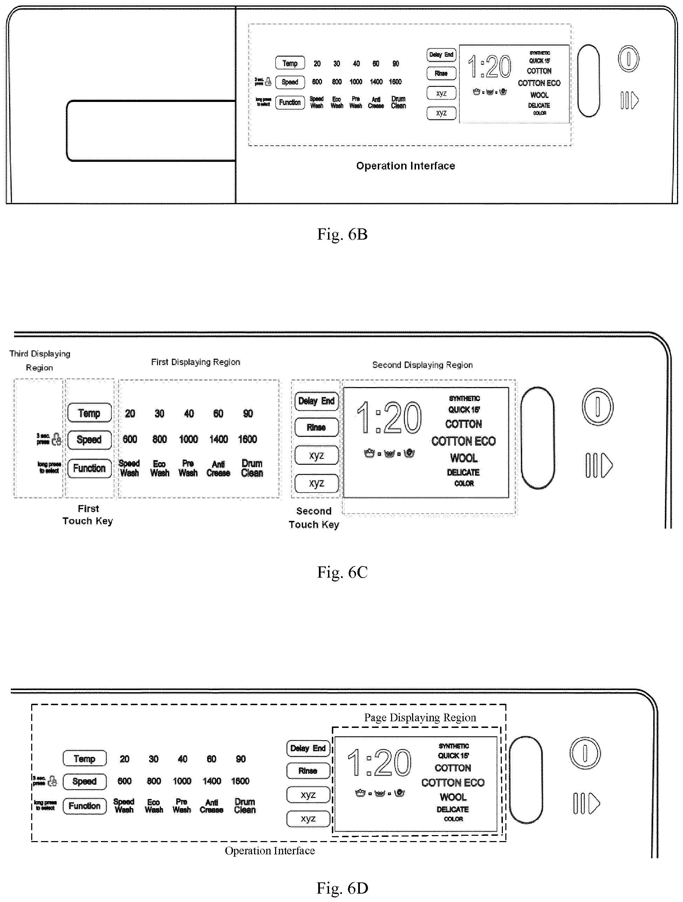

It is described in the Example 2 that the target program may be set according to the sub-region of the manipulation region. In an embodiment of the present disclosure, as shown in Fig. 6C, a first touch key and a second touch key are disposed next to the manipulation region. In order to clearly illustrate the use of the first touch key and the second touch button, the process of adjusting or setting the parameter of the target program by using the first touch key or the second touch key in the touch region is described in another example. Fig. 5 is a flow chart of a controlling method for a household appliance according to Example 3 of the present disclosure.

As shown in Fig. 5, the controlling method of the household appliance may include the following steps.

At step 301: an operation interface is displayed when a power key is pressed.

Specifically, Fig. 6A is a schematic diagram of an operation panel when a power key is not pressed, and Fig. 6B is a schematic diagram of the operation panel when the power key is pressed. In Fig. 6A, a groove is shown as an elongated region, a power key is in the upper right of the groove and a start key is in the lower right of the groove. As shown in Figs. 6A and 6B, the power key and the start key on the operation panel may be mechanical buttons. When the power key is pressed to supply power, the operation interface in Fig. 6C is thus displayed.

The operation interface is configured to display the control program. Alternatively, only one control program is displayed on the operation interface at one time, and the displayed control program is switched by the sliding operation detected by the sensor in the groove in Figs. 6A and 6B. As shown in Fig. 6C, the operation interface may include a touch region and an information displaying region.

The touch region includes a virtual first touch key configured to adjust a value of a parameter item of the control program and a virtual second touch key configured to add a required function to the control program.

The information displaying region includes a first displaying region configured to display the value of the parameter item and a second displaying region configured to display description information of the control program, in which the description information includes at least one of a predicted runtime, a running step, a control program identifier and an adjacent control program identifier. For example, as shown in Fig. 6C, "1:20" is a predicted washing duration, "COTTON ECO" is a currently displayed control program identifier, and "COTTON", "WOOL", "COLOR" and the like are other control program identifiers.

In this example, the second displaying region may be configured to specifically display pages such as the first program setting page, the second program setting page, the third program setting page, and the fourth program setting page mentioned in the foregoing embodiments, and thus being regarded as page displaying regions of these setting pages. The page displaying regions are shown in Fig. 6D.

Alternatively, the information displaying region and the touch region may further include more displaying regions and more touch keys, which are not limited in this embodiment. For example, the information displaying region may further include a third displaying region configured to display a function description corresponding to a touch key.

It should be noted that, when the power key is pressed, the control program displayed on the operation interface may be a latest selected target program, or a pre-designated control program such as a control program ranking first, which is not limited in this embodiment.

At step 302: the sliding operation is detected by the sensor in the groove, and when the sliding operation is detected, a plurality of control programs is displayed scrollably according to an operating direction of the sliding operation, until the sliding operation is stopped.

Specifically, the sliding operation is kept on being performed by the user until a target program to be selected is displayed, such that the target operation is stopped and the display of programs is no longer in a scrollable manner, thus displaying the only target program selected by the user.

During the scrollably displaying process, each control program is displayed in turn and a target program is displayed and finally remains to be displayed.

At step 303: touch operations performed on the first touch key and the second touch key in the touch region are detected, and the target program is adjusted according to the touch operations.

Alternatively, a touch operation performed on the first touch key is detected in the touch region. Before the touch operation performed on the first touch key is detected, a default parameter value and a plurality of parameter values to be selected are displayed in the corresponding first displaying region, and only the default parameter value is in the selected state. When the touch operation is performed on the first touch key, the parameter item corresponding to the first touch key in the target program is adjusted, such that the value of the parameter item is adjusted from the default parameter value to a personalization parameter value and the default parameter value displayed in the first displaying region of the information displaying region is updated to be the personalization parameter value. Specifically, whenever the first touch key is clicked once, one of the plurality of parameter values to be selected is updated to be in a selected state according to a preset sequence, and the parameter value in the selected state is taken as a personalization parameter value.

As shown in Fig. 6C, three first touch keys are respectively displayed with "Temp", "Speed" and "Function", a first touch key defining "Temp" corresponds to a parameter item of a washing water temperature, a first touch key defining "Speed" corresponds to a parameter item of a rotation speed, and a first touch key defining "Function" corresponds to a parameter item of a washing function. Values of the parameter item of the washing function include specific functions such as fast washing, economic washing.

Alternatively, a touch operation on the second touch key is detected in the touch region, and an additional function is added to the target program according to the touch operation on the second touch key. The additional function includes at least one of delayed running and rinsing.

It should be noted that, when the first touch key defining "Function" is long-pressed, an enabling state and a disabling state of the additional function of the target program may be switched. When the first touch key defining "Speed" is clicked for a preset times (for example, three times) in a very short time, the touch region is locked, so as to activate a child lock function.

At step 304: running of the washing machine is controlled according to the target program when a start key is pressed.

Specifically, after the target program is adjusted in step 303, the running of the washing machine is controlled by using the adjusted target program.

In this embodiment, the value of the parameter item of the target program may be adjusted from the default parameter value to the personalization parameter value by the first touch key, and an additional program may be added to the target program by the second touch key, thus realizing the personalization and refinement for the household appliance.

### Example 4

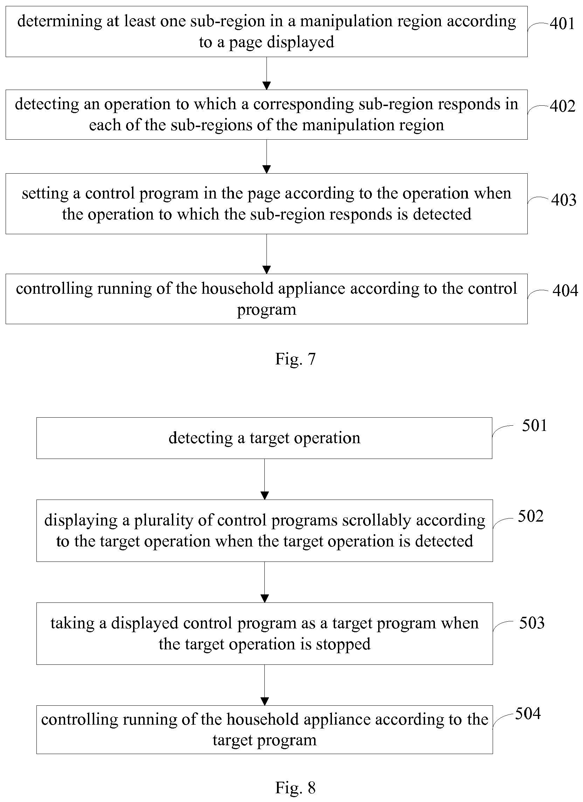

The present disclosure also provides a controlling method for a household appliance. Fig. 7 is a flow chart of a controlling method for a household appliance according to Example 4 of the present disclosure.

As shown in Fig. 7, the controlling method of the household appliance includes the following steps.

At step 401: at least one sub-region is determined in a manipulation region according to a page displayed.

In an embodiment of the present disclosure, a groove may be disposed on a control panel of the household appliance, and a manipulation region may be disposed in the groove. The groove may receive a finger, that is, a width of the groove is similar to a width of a finger. The manipulation region includes at least one sub-region, and different sub-regions respond to different operations and correspond to different control strategies.

In an embodiment of the present disclosure, the number of sub-regions in the manipulation region may be determined and the manipulation region may be divided into sub-regions according to displayed page content. In general, the more complex the content of the page is, more sub-regions are formed in the manipulation region. On the contrary, the simpler the content of the page is, fewer sub-regions are formed in the manipulation region.

At step 402: an operation to which a corresponding sub-region responds is detected in each of the sub-regions of the manipulation region.

In an embodiment of the present disclosure, a sensor may be disposed in the groove and may be configured to detect an operation in each of the sub-regions of the manipulation region.

The operations performed by a user may include clicking or sliding. The operations to which different sub-regions respond may be different. The operation to which a specific sub-region responds may be determined according to a currently displayed page, which will be described in detail hereinafter rather than herein.

Alternatively, a corresponding sub-region dividing manner and an operation to which each of the sub-regions responds may be preset for each page, and when the page is displayed, the corresponding sub-region dividing manner and the operations to which the sub-regions respond are acquired, and accordingly the detection is performed in the manipulation region.

At step 403: a control program in the page is set according to the operation when the operation to which the sub-region responds is detected.

In this embodiment, when an operation to which the sub-region responds in the manipulation region is detected by a sensor in the groove, a plurality of control strategies of the sub-region is queried according to the operation, a control strategy that matches the operation is acquired, and the parameters of the control program are adjusted according to this control strategy so as to set the control program in the page.

The control strategy is configured to indicate the parameters of the control program required to be adjusted and the values of the adjusted parameters. In a process of displaying the same page, each of the sub-regions corresponds to a plurality of control strategies, and each control strategy matches one operation performed by a user, such that the control strategy matched with the sub-region may be queried according to the operation in a certain sub-region, and thus adjusting parameters of the control program to be the values indicated by the control strategy.

At step 404: running of the household appliance is controlled according to the control program.

The set control program includes the values of every control parameter when the household appliance is running. A washing machine is taken as an example, and the control program may include values of a washing duration, a rotation speed, etc. According to the values of the various control parameters, the running of the household appliance is controlled.

In order to clearly illustrate this example, several possible application scenes are provided. Different program settings pages having different program setting contents are displayed in different application scenes. In order to distinguish, different program setting pages are referred to as a first program setting page, a second program setting page, a third program setting page and a fourth program setting page respectively. Each of the scenes will be introduced as follows.

### Scene 1:

If a displayed page is the first program setting page in step 401, the manipulation region includes a first sub-region. An operation to which the second sub-region responds is a target operation carrying direction information.

As shown in Fig. 2, the groove 210 is disposed longitudinally, and there is a straight line with a bidirectional arrow in the manipulation region 220. The region in which the straight line with the bidirectional arrow is located is the first sub-region. A finger may be placed in the groove, and the finger may continuously slide upward or downward in the first sub-region, such that the target operation carries the direction information.

### Scene 2:

If a displayed page is the second program setting page, the manipulation region includes a first sub-region and a second sub-region. An operation to which the second sub-region responds is a triggered operation carrying no direction information.

As shown in Fig. 4A, the groove is disposed longitudinally, and the manipulation region includes a region in which an OK key is located and a region in which a straight line with a bidirectional arrow on top of the OK key is located. The region in which the OK key is located is a second sub-region and may respond to the triggered operation. The region in which the straight line with the bidirectional arrow is located is the first sub-region and may respond to the sliding operation carrying the direction information. The sliding operation may be performed in the first region to select the options in the displaying region, and the OK key is triggered for confirming the selection.

### Scene 3:

If a displayed page is the third program setting page, the manipulation region includes a first sub-region and at least two second sub-regions.

As shown in Fig. 4B, the groove is disposed longitudinally, and the manipulation region includes a region in which an OK key is located, a region in which a back key is located, and a region in which a straight line with a bidirectional arrow is located. The region in which the OK key is located and the region in which the back key is located are both a second sub-region and may respond to the triggered operation. The region in which the straight line with the bidirectional arrow is located is the first sub-region and may respond to the sliding operation. In other words, the OK key or the back key may be triggered or the sliding operation may be performed in the region in which the straight line with the bidirectional arrow is located.

### Scene 4:

If a displayed page is the fourth program setting page, the manipulation region includes at least three second sub-regions. In other words, when the fourth program setting page is displayed in the page, only the triggered operation carrying no direction information may be performed in the manipulation region.

As shown in Fig. 4C, the groove is disposed longitudinally, and the manipulation region includes an upward moving key, an OK key and a downward moving key. All of the regions where the three keys are located respectively are the second sub-regions. The triggered operation may be performed on the upward moving key, the downward moving key and the OK key.

It should be noted that the first program setting page, the second program setting page, the third program setting page, and the fourth program setting page described above have different program setting contents. In other words, different types of the manipulation region may be set according to different displaying contents of the displayed page of the household appliance. For example, the manipulation region including one first sub-region is applicable to a setting page where a program setting content has only one option. The manipulation region including a first sub-region and at least two second sub-regions is suitable to a setting page having a complex level configuration of contents.

With the controlling apparatus for a household appliance provided in embodiments of the present disclosure, at least one sub-region is determined in the manipulation region according to the page displayed; an operation to which a corresponding sub-region responds is detected in each of the sub-regions of the manipulation region; a control program in the page is set according to the operation when the operation to which the sub-region responds is detected. In this embodiment, a parameter of the control program may be selected according to the operation of the sub-region so that the control program may be set in a refined and personalized manner without having to run only according to a default parameter value of the control program, thus solving the technical problems of inaccurate control and unsatisfied control effect of the household appliances in the related art.

### Example 5

In order to realize the above embodiments, the present disclosure further provides a controlling method for a household appliance. Fig. 8 is a flow chart of a controlling method for a household appliance according to Example 5 of the present disclosure.

As shown in Fig. 8, the controlling method of the household appliance includes the following steps.

At step 501: a target operation is detected.

The target operation may be a sliding operation.

In an embodiment of the present disclosure, a groove is disposed on the control panel of the household appliance. The sliding operation is detected by using a sensor installed in the groove. The groove may receive a finger, that is, a width of the groove is similar to a width of the finger. A sensor is disposed in the groove, and it may be configured to detect a direction of the sliding operation. Further, a sliding distance or a sliding speed of the sliding operation may also be detected.

It should be noted that, it is known by those skilled in the art that the sensor for detecting the sliding operation may specifically be in a form of a touch pad or a roller. In the present embodiment, the specific form of the sensor is not limited.

At step 502: a plurality of control programs is displayed scrollably according to the target operation when the target operation is detected.

Specifically, if an operation direction of the target operation is a first direction, the plurality of control programs is displayed scrollably in a first sequence; if the operation direction of the target operation is a second direction opposite to the first direction, the plurality of control programs is displayed scrollably scrolled in a second sequence opposite to the first sequence.

In an embodiment of the present disclosure, the grooves are disposed in a longitudinal direction, and a direction of the sliding operation is upward or downward in the longitudinal direction. Therefore, if the sliding operation is to slide upward, a plurality of control programs is displayed scrollably in a positive sequence. Conversely, if the slide operation is to slide downward, the plurality of control programs is displayed scrollably in a reverse sequence.

The number of the control programs is more than one, and the plurality of control programs may be ranked according to a sequence of identification characters of the control program, or to frequencies of control programs being selected. In this embodiment, the ranking manner of the control program is not limited.

It should be noted that, if the sensor may detect the sliding distance or sliding speed of the sliding operation, a rolling speed (that is, a duration for displaying each control program) when the plurality of control programs is displayed scrollably may be adjusted according to the sliding distance or the sliding speed. The longer the sliding distance is or the faster the sliding speed is, the shorter the duration for displaying a control program is.

At step 503: a displayed control program is taken as a target program when the target operation is stopped.

Specifically, a user may keep performing a target operation continuously until a desired target program is displayed, then the target operation is stopped. Accordingly, the scrollable display of control programs of the household appliance may be stopped and only the selected target program is displayed.

At step 504: running of the household appliance is controlled according to the target program.

Specifically, the target program is configured to indicate the values of the control parameter item when the household appliance is running. For example, the parameter item for the washing machine herein include a washing temperature, a motor rotation speed, a duration of each washing link, etc. Different control programs are formed according to combinations of different values of the parameter item in order to facilitate refined control of the washing process.

In this example, the target operation is detected; a plurality of control programs is displayed scrollably according to the target operation when the target operation is detected; the displayed control program is taken as the target program when the target operation is stopped; and running of the household appliance is controlled according to the target program. Since a manner of displaying a plurality of control programs scrollably according to an operation direction of the target operation performed by the user is employed, displaying and selecting of the plurality of control programs may be realized, and the number of the control programs is no longer limited by the displaying area, thus increasing options of control programs, realizing refined control of the household appliance, and solving the technical problems of inaccurate control and unsatisfied control effect of the household appliances in the related art.

### Example 6

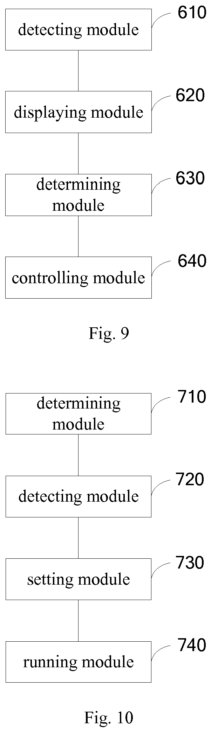

In order to realize the above embodiments, the present disclosure further provides a controlling apparatus for a household appliance. Fig. 9 is a schematic diagram of a controlling apparatus for a household appliance according to Example 6 of the present disclosure.

As shown in Fig. 9, the controlling apparatus for the household appliance includes a detecting module 610, a displaying module 620, a determining module 630, and a controlling module 640.

The detecting module 610 is configured to detect a target operation in a manipulation region if a first program setting page is displayed.

The displaying module 620 is configured to display a plurality of control programs scrollably according to the target operation when the target operation is detected.

The determining module 630 is configured to take a displayed control program as a target program when the target operation is stopped.

The controlling module 640 is configured to control the operation of the household appliance according to the target program.

In an embodiment of the present disclosure, the apparatus may further include:
a first displaying module configured to display a page for setting a target program;
a first determining module configured to determine at least one sub-region in the manipulation region according to the displayed page;
the detecting module 610 further configured to detect an operation to which the corresponding sub-region responds in each of the sub-regions of the manipulation region;
a first setting module configured to set the target program in the page according to an operation when the operation to which the sub-region responds is detected.

In an embodiment of the present disclosure, the first determining module is further configured to:
determine that the manipulation region includes a first sub-region and a second sub-region if the second program setting page is displayed; and/or
determine that the manipulation region includes the first sub-region and at least two second sub-regions if a third program setting page is displayed; and/or
determine that the manipulation region includes at least three second sub-regions if the fourth program setting page is displayed;
in which the operation to which the first sub-region responds is the target operation carrying the direction information; the operation to which the second sub-region responds is the triggered operation carrying no direction information;
the first program setting page, the second program setting page, the third program setting page and the fourth program setting page have different program setting contents.

In an embodiment of the present disclosure, the first setting module is further configured to:
control a cursor to move in the second program setting page according to the direction information of the target operation when the target operation is detected in the first sub-region; and
adjust a value or a selected state of an option corresponding to a position of the cursor when the triggered operation is detected in the second sub-region, in which the option is configured to set a parameter of the target program,
if the second program setting page is displayed.

In an embodiment of the present disclosure, the first setting module is further configured to:
control a cursor to move in a third program setting page according to the direction information of the target operation when the target operation is detected in the first sub-region;
adjust a value or a selected state of an option corresponding to a position of the cursor when the triggered operation is detected in a second sub-region of the at least two second sub-regions, in which the option is configured to set a parameter of the target program; and
determine a menu level of the third program setting page currently displayed and displaying a previous menu of the menu level when the triggered operation is detected in another second sub-region of the at least two second sub-regions,
if the third program setting page is displayed.

In an embodiment of the present disclosure, the first setting module is further configured to:
control a cursor to move in a fourth program setting page in a first direction when the triggered operation is detected in a second sub-region of at least three second sub-regions;
control the cursor to move in the fourth program setting page in a second direction different from the first direction when the triggered operation is detected in another second sub-region of the at least three second sub-regions; and
adjust a value or a selected state of an option corresponding to a position of the cursor when the triggered operation is detected in yet another second sub-region of the at least three second sub-regions, in which the option is configured to set a parameter of the control program,
if a fourth program setting page is displayed.

In an embodiment of the present disclosure, the apparatus may further include:
a disabling module is configured to disable sub-regions except one sub-region in the manipulation region after detecting the operation responding to the corresponding sub-region in each of the sub-regions of the manipulation region, if the operation is detected in the one sub-region of the manipulation region;
an enabling module is configured to re-enable the sub-regions except the one sub-region if the operation in the one sub-region does not reach a preset duration.

In an embodiment of the present disclosure, the displaying module 620 is further configured to:
display the plurality of control programs scrollably in a first sequence if an operation direction of the target operation is a first direction; and
display the plurality of control programs scrollably in a second sequence opposite to the first sequence if the operation direction of the target operation is a second direction opposite to the first direction.

In an embodiment of the present disclosure, the controlling module 640 is further configured to:
detect a touch operation on a first touch key in a touch region after taking the displayed control program as the target program;
adjust a parameter item corresponding to the first touch key in the target program according to the touch operation on the first touch key so as to adjust a value of the parameter item from a default parameter value to a personalization parameter value; and
update the default parameter value displayed in an information displaying region as the personalization parameter value.

Specifically, the parameter item corresponding to the first touch key includes at least one parameter of a temperature, a washing function, and a rotation speed, and adjusting the parameter item corresponding to the first touch key in the target program according to the touch operation on the first touch key includes: displaying the default parameter value in a selected state and a plurality of parameter values to be selected; updating one of the plurality of parameters to be selected to be in a selected state in a preset sequence whenever the first touch key is clicked once; and taking the parameter value to be selected in the selected state as the personalization parameter value.

It should be noted that when the parameter item corresponding to the first touch key includes the washing function, the first touch key is further configured to switch an enabling state and a disabling state of an additional function of the target program when the first touch key is long-pressed.

Further, in an embodiment of the present disclosure, the controlling module 640 is further configured to: detect a touch operation on a second touch key in a touch region after taking the displayed control program as the target program; and add an additional function to the target program according to the touch operation on the second touch key; in which the additional function includes at least one of a delayed running and a rinsing.

Further, in an embodiment of the present disclosure, the displaying module 620 is further configured to display an operation interface when a power key is detected to be pressed before detecting a target operation performed by a user.

The operation interface includes:
a touch region including a virtual first touch key configured to adjust a value of a parameter item of the control program and/or a virtual second touch key configured to add a required function to the control program; and
an information displaying region including a first displaying region configured to display the value of the parameter item and/or a second displaying region configured to display each page including description information of the control program, in which the description information includes at least one of a predicted runtime, a running step, a control program identifier and an adjacent control program identifier.

In an embodiment of the present disclosure, the controlling module 640 is further configured to control running of the household appliance according to the target program when a start key is pressed.

In an embodiment of the present disclosure, the manipulation region is disposed in a groove configured to receive a user's finger.

With the controlling apparatus for a household appliance provided in embodiments of the present disclosure, a target operation in a manipulation region is detected if a first program setting page is displayed; a plurality of control programs is displayed scrollably according to the target operation when the target operation is detected; a displayed control program is taken as a target program when the target operation is stopped; and running of the household appliance is controlled according to the target program. Since a manner of displaying a plurality of control programs scrollably according to an operation direction of the target operation performed by a user in the manipulation region is employed, displaying and selecting of the plurality of control programs may be realized, and the number of the control programs is no longer limited by the displaying area, thus increasing options of control programs, realizing refined control of the household appliance, and solving the technical problems of inaccurate control and unsatisfied control effect of the household appliances in the related art.

### Example 7

In order to realize the above embodiments, the present disclosure further provides a controlling apparatus for a household appliance. Fig. 10 is a schematic diagram of a controlling apparatus for a household appliance according to Example 7 of the present disclosure.

As shown in Fig. 10, the controlling apparatus of the household appliance includes: a determining module 710, a detecting module 720, a setting module 730, and a running module 740.

The determining module 710 is configured to determine at least one sub-region in a manipulation region according to a page displayed;
The detecting module 720 is configured to detect an operation to which a corresponding sub-region responds in each of the sub-regions of the manipulation region.

The setting module 730 is set a control program in the page according to the operation when the operation to which the sub-region responds is detected.

The operating module 740 is configured to control running of the household appliance according to the control program.

In an embodiment of the present disclosure, the setting module 730 is further configured to:
determine that the manipulation region includes a first sub-region if a first program setting page is displayed; and/or
determine that the manipulation region includes a first sub-region and a second sub-region if a second program setting page is displayed; and/or
determining that the manipulation region includes the first sub-region and at least two second sub-regions if a third program setting page is displayed; and/or
determining that the manipulation region includes at least three second sub-regions if a fourth program setting page is displayed;
in which an operation to which the first sub-region responds is a target operation carrying direction information; an operation to which the second sub-region responds is a triggered operation carrying no direction information; and
the first program setting page, the second program setting page, the third program setting page, and the fourth program setting page have different program setting contents.

With the controlling apparatus for a household appliance provided in embodiments of the present disclosure, at least one sub-region is determined in the manipulation region according to the page displayed; an operation to which a corresponding sub-region responds is detected in each of the sub-regions of the manipulation region; a control program in the page is set according to the operation when the operation to which the sub-region responds is detected. In this embodiment, a parameter of the control program may be selected according to the operation of the sub-region so that the control program may be set in a refined and personalized manner without having to run only according to a default parameter value of the control program, thus solving the technical problems of inaccurate control and unsatisfied control effect of the household appliances in the related art.

### Example 8

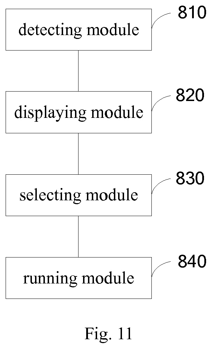

In order to realize the above embodiments, the present disclosure further provides a controlling apparatus for a household appliance. Fig. 11 is a schematic diagram of a controlling apparatus for a household appliance according to Example 8 of the present disclosure.

As shown in Fig. 11, the apparatus includes: a detecting module 810, a displaying module 820, a selecting module 830, and a running module 840.

The detecting module 810 is configured to detect a target operation performed by a user.

The displaying module 820 is configured to display a plurality of control programs scrollably according to the target operation when the target operation is detected.

The selecting module 830 is configured to take a displayed control program as a target program when the target operation is stopped.

The operation module 840 is configured to control running of the household appliance according to the target program.

In embodiments of the present disclosure, the target operation performed by a user is detected; a plurality of control programs is displayed scrollably according to the target operation when the target operation is detected; the displayed control program is taken as the target program when the target operation is stopped; and running of the household appliance is controlled according to the target program. Since a manner of displaying a plurality of control programs scrollably according to an operation direction of the target operation performed by a user is employed, displaying and selecting of the plurality of control programs may be realized, and the number of the control programs is no longer limited by the displaying area, thus increasing options of control programs, realizing refined control of the household appliance, and solving the technical problems of inaccurate control and unsatisfied control effect of the household appliances in the related art.

In order to realize the above embodiments, the present disclosure further provides a washing machine configured to perform a controlling method for a household appliance provided by any one of the above embodiments.

In order to realize the above embodiments, the present disclosure further provides a computer device including: a memory, a processor, and a computer program stored in the memory and being executable by the processor, in which when the computer program is executed by the processor, the processor is configured to perform a controlling method for a household appliance provided by any one of the above embodiments.

In order to realize the above embodiments, the present disclosure further provides a non-temporary computer-readable storage medium that, when executed by a processor, is configured to perform a controlling method for a household appliance provided by any one of the above embodiments.

In order to realize the above embodiments, the present disclosure further provides a computer program product having instructions that, when executed by a processor, are configured to perform a controlling method for a household appliance provided by any one of the above embodiments.

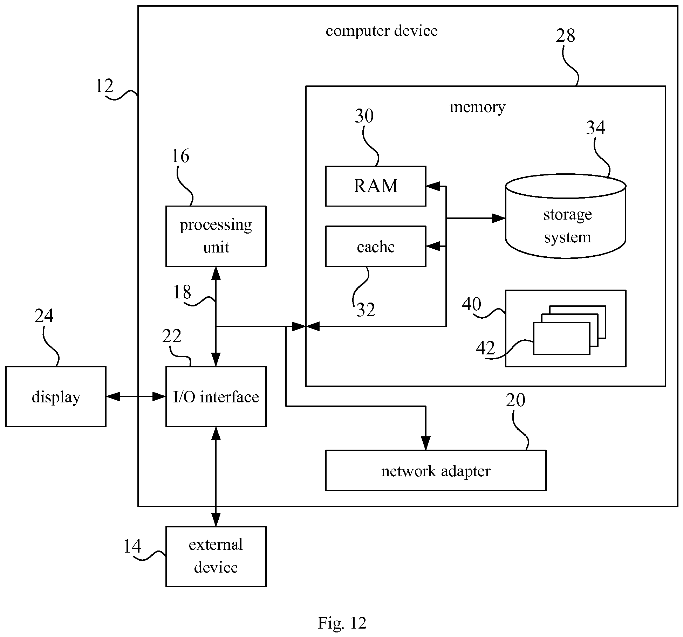

Fig. 12 is a block diagram of an exemplary computer device applicable to realize the embodiments of the present disclosure. The computer device 12 shown in Fig. 12 is merely an example, and should not impose any limitation on the function and the using scope of the embodiments of the present disclosure.

As shown in Fig. 12, the computer device 12 is represented in a form of a general purpose computing device. The components of the computer device 12 may include, but are not limited to, one or more processors or processing units 16, a system memory 28, a bus 18 connecting different system components including the system memory 28 and the processing unit 16.

The bus 18 represents one or more of several types of bus architectures, and includes a memory bus or a memory controller, a peripheral bus, a graphics acceleration port, a processor, or a local bus that uses any of a variety of bus architectures. For example, these architectures include, but are not limited to, an Industry Standard Architecture (ISA) bus, a Micro Channel Architecture (MAC) bus, an enhanced ISA bus, a Video Electronics Standards Association (hereinafter referred to as VESA), a local bus and a Peripheral Component Interconnection (PCI) bus.

The computer device 12 may typically include a variety of computer system readable media. These media may be any available media that may be accessed by the computer device 12 and include volatile media, non-volatile media, removable media and non-removable media.

The memory 28 may include a computer system readable medium in a form of a volatile memory, such as a random access memory (RAM) 30 and/or a cache memory 32. The computer device 12 may further include other removable/non-removable, volatile/non-volatile computer system storage media. By way of example only, the storage system 34 may be configured to read and write non-removable, non-volatile magnetic media (not shown in Fig. 12, commonly referred to as a "hard disk drive"). Although not shown in Fig. 12, a disk drive for reading and writing a removable non-volatile magnetic disk (for example, a "floppy disk") and a compact disc for reading and writing a removable non-volatile optical disk (for example, a Compact Disc Read Only Memory (hereinafter referred to as CD-ROM), a Digital Video Disc Read Only Memory (DVD-ROM) or other optical media). In these cases, each drive may be connected with the bus 18 via one or more data medium interfaces. Memory 28 may include at least one program product having a set of (e.g., at least one) program modules configured to perform the functions in various embodiments of the present disclosure.

A program module/utility 40 having a set of (at least one) program modules 42 may be stored in, for example, the memory 28. Such program module 40 includes, but is not limited to, an operating system, one or more application programs, other program modules, and program data, one or more combination in these embodiments may include a implementation of a network environment. The program module 42 generally performs the functions and/or methods in the embodiments described in the present disclosure.

The computer device 12 may also communicate with one or more external devices 14 (e.g., a keyboard, a pointing device, a display 24, etc.) and may also communicate with one or more devices that enable a user to interact with the computer device 12 and/or communicate with any device (e.g., a network card, a modem, etc.) that enables the computer device 12 to communicate with one or more other computer devices. This communication may be performed via an input/output (I/O) interface 22. Moreover, the computer device 12 may communicate with one or more networks such as a local area network (LAN), a wide area network (WAN) and/or a public network, e.g., Internet, through a network adapter 20. As shown in figures, the network adapter 20 communicates with other modules of the computer device 12 via the bus 18. It should be understood that although not shown in figures, the computer device 12 may be used in combination of other hardware and/or software modules including, but being not limited to, a microcode, a device driver, a redundant processing units, an external disk drive array, a RAID system, a tape drive and a data backup storage system.

The processing unit 16 executes various functional applications as well as data processing (for example, realizing the methods mentioned in the preceding embodiments) by operating a program stored in the system memory 28.

Reference throughout this specification to "an embodiment," "some embodiments," "one embodiment", "another example," "an example," "a specific example," or "some examples," means that a particular feature, architecture, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, architectures, materials, or characteristics may be combined in any suitable manner in one or more embodiments or examples.

In addition, terms such as "first" and "second" are used herein for purposes of description and are not intended to indicate or imply relative importance or significance or to imply the number of indicated technical features. Thus, the feature defined with "first" and "second" may include one or more of this feature. In the description of the present disclosure, "a plurality of' means two or more than two, e.g., two or three, unless specified otherwise.

It will be understood that, the flow chart or any process or method described herein in other manners may represent a module, segment, or portion of code that includes one or more executable instructions to implement the specified logic function(s) or that includes one or more executable instructions of the steps of the progress. Although the flow chart shows a specific order of execution, it is understood that the order of execution may differ from that which is depicted. For example, the order of execution of two or more boxes may be scrambled relative to the order shown.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system including processors or other systems capable of obtaining the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer readable medium include but are not limited to: an electronic connection (an electronic device) with one or more wires, a portable computer enclosure (a magnetic device), a random access memory (RAM), a read only memory (ROM), an erasable programmable read-only memory (EPROM or a flash memory), an optical fiber device and a portable compact disk read-only memory (CDROM). In addition, the computer readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

It would be understood by those skilled in the art that all or a part of the steps carried by the method in the above-described embodiments may be completed by relevant hardware instructed by a program. The program may be stored in a computer readable storage medium. When the program is executed, one or a combination of the steps of the method in the above-described embodiments may be completed.

In addition, individual functional units in the embodiments of the present disclosure may be integrated in one processing module or may be separately physically present, or two or more units may be integrated in one module. The integrated module as described above may be achieved in the form of hardware, or may be achieved in the form of a software functional module. If the integrated module is achieved in the form of a software functional module and sold or used as a separate product, the integrated module may also be stored in a computer readable storage medium.

The storage medium mentioned above may be read-only memories, magnetic disks, CD, etc. Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A controlling method for a household appliance, comprising:
detecting a target operation in a manipulation region if a first program setting page is displayed;
displaying a plurality of control programs scrollably according to the target operation when the target operation is detected;
taking a displayed control program as a target program when the target operation is stopped; and
controlling running of the household appliance according to the target program.

2. The controlling method according to claim 1, wherein before controlling operations of the household appliance according to the target program, the method further comprises:
displaying a page for setting the target program;
determining at least one sub-region in the manipulation region according to the page displayed;
detecting an operation to which a corresponding sub-region responds in each of the sub-regions of the manipulation region; and
setting the target program in the page according to the operation when the operation to which the sub-region responds is detected.

3. The controlling method according to claim 2, wherein determining at least one sub-region in the manipulation region according to the page displayed comprises:
determining that the manipulation region comprises a first sub-region and a second sub-region if a second program setting page is displayed; and/or
determining that the manipulation region comprises the first sub-region and at least two second sub-regions if a third program setting page is displayed; and/or
determining that the manipulation region comprises at least three second sub-regions if a fourth program setting page is displayed;
wherein an operation to which the first sub-region responds is a target operation carrying direction information; an operation to which the second sub-region responds is a triggered operation carrying no direction information; and
the first program setting page, the second program setting page, the third program setting page, and the fourth program setting page have different program setting contents.

4. The controlling method according to claim 2, wherein setting the target program in the page according to the operation when the operation to which the corresponding sub-region responds is detected comprises:
if the second program setting page is displayed,
controlling a cursor to move in the second program setting page according to the direction information of the target operation when the target operation is detected in the first sub-region; and
adjusting a value or a selected state of an option corresponding to a position of the cursor when the triggered operation is detected in the second sub-region, wherein the option is configured to set a parameter of the target program.

5. The controlling method according to claim 2, wherein setting the target program in the page according to the operation when the operation to which the corresponding sub-region responds is detected comprises:
if the third program setting page is displayed,
controlling a cursor to move in a third program setting page according to the direction information of the target operation when the target operation is detected in the first sub-region;
adjusting a value or a selected state of an option corresponding to a position of the cursor when the triggered operation is detected in a second sub-region of the at least two second sub-regions, wherein the option is configured to set a parameter of the target program; and
determining a menu level of the third program setting page currently displayed and displaying a previous menu of the menu level when the triggered operation is detected in another second sub-region of the at least two second sub-regions.

6. The controlling method according to claim 2, wherein setting the target program in the page according to the operation when the operation to which the corresponding sub-region responds is detected comprises:
if a fourth program setting page is displayed,
controlling a cursor to move in a fourth program setting page in a first direction when the triggered operation is detected in a second sub-region of at least three second sub-regions;
controlling the cursor to move in the fourth program setting page in a second direction different from the first direction when the triggered operation is detected in another second sub-region of the at least three second sub-regions; and
adjusting a value or a selected state of an option corresponding to a position of the cursor when the triggered operation is detected in yet another second sub-region of the at least three second sub-regions, wherein the option is configured to set a parameter of the control program.

7. The controlling method according to claim 2, wherein after detecting the operation responding to the corresponding sub-region in each of the sub-regions of the manipulation region, the method further comprises:
disabling sub-regions except one sub-region in the manipulation region if the operation is detected in the one sub-region of the manipulation region; and
re-enabling the sub-regions except the one sub-region if the operation in the one sub-region does not reach a preset duration.

8. The controlling method according to claim 1, wherein displaying the plurality of control programs scrollably according to the target operation comprises:
displaying the plurality of control programs scrollably in a first sequence if an operation direction of the target operation is a first direction; and
displaying the plurality of control programs scrollably in a second sequence opposite to the first sequence if the operation direction of the target operation is a second direction opposite to the first direction.

9. The controlling method according to claim 1, wherein after taking the displayed control program as the target program, the controlling method further comprises:
detecting a touch operation on a first touch key in a touch region;
adjusting a parameter item corresponding to the first touch key in the target program according to the touch operation on the first touch key so as to adjust a value of the parameter item from a default parameter value to a personalization parameter value; and
updating the default parameter value displayed in an information displaying region as the personalization parameter value.

10. The controlling method according to claim 1, wherein after taking the displayed control program as the target program, the controlling method further comprises:
detecting a touch operation on a second touch key in a touch region; and
adding an additional function to the target program according to the touch operation on the second touch key; wherein the additional function comprises at least one of a delayed running and a rinsing.

11. The controlling method according to claim 9, wherein the parameter item corresponding to the first touch key comprises at least one parameter of a temperature, a washing function and a rotation speed, and adjusting the parameter item corresponding to the first touch key in the target program according to the touch operation on the first touch key comprises:
displaying the default parameter value in a selected state and a plurality of parameter values to be selected;
updating one of the plurality of parameter values to be selected to be in a selected state in a preset sequence whenever the first touch key is clicked once; and
taking the parameter value to be selected in the selected state as the personalization parameter value.

12. The controlling method according to claim 9, wherein when the parameter item corresponding to the first touch key comprises the washing function, the first touch key is further configured to switch an enabling state and a disabling state of an additional function of the target program when the first touch key is long-pressed.

13. The controlling method according to any one of claims 1 to 12, wherein before detecting a target operation in the manipulation region if the first program setting page is displayed, the controlling method further comprises:
displaying an operation interface when a power key is pressed,
wherein the operation interface comprises:
a touch region comprising a virtual first touch key configured to adjust a value of a parameter item of the control program and/or a virtual second touch key configured to add a required function to the control program; and
an information displaying region comprising a first displaying region configured to display the value of the parameter item and/or a second displaying region configured to display each page comprising description information of the control program, wherein the description information comprises at least one of a predicted runtime, a running step, a control program identifier and an adjacent control program identifier;
wherein the second displaying region is configured to display the first program setting page by default after the power key is pressed.

14. The controlling method according to any one of claims 1 to 13, wherein controlling running of the household appliance according to the target program comprises:
when a start key is pressed, running of the household appliance is controlled according to the target program.

15. The controlling method according to any one of claims 1 to 14, wherein the manipulation region is disposed in a groove configured to receive a user's finger.

16. A controlling method for a household appliance, comprising:
determining at least one sub-region in a manipulation region according to a page displayed;
detecting an operation to which a corresponding sub-region responds in each of the sub-regions of the manipulation region;
setting a control program in the page according to the operation when the operation to which the sub-region responds is detected; and
controlling running of the household appliance according to the control program.

17. The controlling method according to claim 16, wherein determining at least one sub-region in a manipulation region according to a page displayed comprises:
determining that the manipulation region comprises a first sub-region if a first program setting page is displayed; and/or
determining that the manipulation region comprises the first sub-region and a second sub-region if a second program setting page is displayed; and/or
determining that the manipulation region comprises the first sub-region and at least two second sub-regions if a third program setting page is displayed; and/or
determining that the manipulation region comprises at least three second sub-regions if a fourth program setting page is displayed;
wherein an operation to which the first sub-region responds is a target operation carrying direction information; an operation to which the second sub-region responds is a triggered operation carrying no direction information; and
the first program setting page, the second program setting page, the third program setting page, and the fourth program setting page have different program setting contents.

18. A controlling method for a household appliance, comprising:
detecting a target operation;
displaying a plurality of control programs scrollably according to the target operation when the target operation is detected;
taking a displayed control program as a target program when the target operation is stopped; and
controlling running of the household appliance according to the target program.

19. A controlling apparatus for a household appliance, comprising:
a detecting module configured to detect a target operation in a manipulation region if a first program setting page is displayed;
a displaying module configured to display a plurality of control programs scrollably according to the target operation when the target operation is detected;
a determining module configured to take a displayed control program as a target program when the target operation is stopped; and
a controlling module configured to control running of the household appliance according to the target program.

20. A controlling apparatus for a household appliance, comprising:
a determining module configured to determine at least one sub-region in a manipulation region according to a page displayed;
a detecting module configured to detect an operation to which a corresponding sub-region responds in each of the sub-regions of the manipulation region;
a setting module configured to set a control program in the page according to the operation when the operation to which the sub-region responds is detected; and
a running module configured to control running of the household appliance according to the control program.

21. A controlling apparatus for a household appliance, comprising:
a detecting module configured to detect a target operation performed;
a displaying module configured to display a plurality of control programs scrollably according to the target operation when the target operation is detected;
a selecting module configured to take a displayed control program as a target program when the target operation is stopped; and
a running module configured to control running of the household appliance according to the target program.

22. A washing machine configured to perform a controlling method for a household appliance according to any one of claims 1 to 15, a controlling method for a household appliance according to claim 16 or 17, or a controlling method for a household appliance according to claim 18.

23. A computer device, comprising: a memory, a processor, and a computer program stored in the memory and being executable by the processor, wherein when the computer program is executed by the processor, the processor is configured to perform a controlling method for a household appliance according to any one of claims 1-15, a controlling method for a household appliance according to claim 16 or 17, or a controlling method for a household appliance according to claim 18.

24. A non-temporary computer-readable storage medium having stored therein a computer program that, when executed by a processor, is configured to perform a controlling method for a household appliance according to any one of claims 1-15, a controlling method for a household appliance according to claim 16 or 17, or a controlling method for a household appliance according to claim 18.

25. A computer program product having instructions that, when executed by a processor, are configured to perform a controlling method for a household appliance according to any one of claims 1-15, a controlling method for a household appliance according to claim 16 or 17, or a controlling method for a household appliance according to claim 18.
